# EUROPÄISCHE PATENTSCHRIFT

(11) **EP 2 499 036 B1**
(45) Veröffentlichungstag und Bekanntmachung des Hinweises auf die Patenterteilung: **18.06.2014**
(21) Anmeldenummer: 10778631.1
(22) Anmeldetag: 10.11.2010
(51) Int. Cl.: B62D 1/06, B68F 1/00, C09J 5/00

(54) **VERFAHREN ZUR BELEDERUNG VON FAHRZEUGRAUMINNENTEILEN**
METHOD FOR APPLYING LEATHER TO VEHICLE INTERIOR PARTS
PROCÉDÉ POUR LE REVÊTEMENT EN CUIR DE PARTIES INTÉRIEURES D'ESPACE DE VÉHICULE

(30) Priorität: 11.11.2009 AT 17852009
(43) Veröffentlichungstag der Anmeldung: 19.09.2012
(73) Patentinhaber: Wollsdorf Leder Schmidt & Co. Ges.m.b.H., 8181 Wollsdorf (AT)
(72) Erfinder: KRAUS-GÜNTNER, Elisabeth, A-8160 Weiz (AT)
(74) Vertreter: Röggla, Harald
(86) Internationale Anmeldenummer: PCT/EP2010/067193
(87) Internationale Veröffentlichungsnummer: WO 2011/058049

(56) Entgegenhaltungen:
- WO-A1-01/81080
- DE-A1-102007 031 014
- GB-A- 2 065 143
- US-A- 5 743 408

## Beschreibung

Die Erfindung bezieht sich auf ein Verfahren zur Herstellung von Leder für die Belederung von Bauteilen und die Erfindung bezieht sich weiters auf Bauteile mit einer durch Belederung mit Leder erzeugten Lederoberfläche.

Das Dokument AT 504 882 A4 offenbart ein Verfahren zur Herstellung von Lederlenkrädern für Kraftfahrzeuge, bei dem das Lederlenkrad abschnittsweise mit Leder beschichtet wird. Das Leder wird zugeschnitten, zu einem Streifenring beziehungsweise Lederkleid vernäht und anschließend mit einem Kleber beschichtet. Als Kleber wird ein Trocken-Klebstoff verwendet, der bei einem Pressvorgang durch Hitze aktiviert wird.

Bei diesem bekannten Verfahren zur Herstellung eines Lederlenkrades und bei diesem bekannten Lederlenkrad hat sich als Nachteil erwiesen, dass der Trocken-Klebstoff seine Klebeeigenschaften erst durch Aufbringen von Hitze erhält. Das Beledern von Lenkrädern ist zu einem guten Teil eine manuelle Tätigkeit, bei der das Lederkleid an die richtige Stelle positioniert werden muss, bevor es vernäht werden kann. Der Klebstoff hat somit einerseits die Aufgabe das Lederkleid für das Vernähen an der richtigen Position zu halten als auch während der gesamten Verwendungsdauer des Lederlenkrades ein Verrutschen des Leders auf dem Lederlenkrad zu verhindern. Der Trocken-Klebstoff kann bei diesem bekannten Verfahren nicht zum Vorpositionieren verwendet werden, da er erst bei dem Pressvorgang durch Hitze aktiviert wird und dann unmittelbar klebt.

Bei dem bekannten Verfahren hat sich weiters als Nachteil erwiesen, dass das Lederkleid nach dem Aktivieren des Klebers durch Hitze nicht mehr vom Lederlenkrad abgenommen werden kann, ohne das Leder zu zerstören. So kann es einerseits vorkommen, dass das Lederkleid beim Pressvorgang verrutscht und das Lederkleid an einer falschen Position verklebt wird. Andererseits kommt es immer wieder zu Reklamationen und Retournierung von Lederlenkrädern. In beiden Fällen ist ein zerstörungsfreies Abnehmen des Lederkleids vom Lederlenkrad nicht möglich, weshalb relativ hohe Mehrkosten entstehen.

Das Dokument WO 2009/016007 A1 offenbart beim Beledern eines Lenkrades ein doppelseitiges Klebeband auf das Lenkrad beziehungsweise auf eine bereits auf dem Lenkrad aufgebrachte Schaumstoffschicht aufzukleben. Hierdurch ist ein Vorpositionieren des Lederkleides auf dem Lenkrad vor Verklemmung des Leders in Nuten und/oder vor dem Vernähen möglich.

Bei diesem bekannten Verfahren zur Belederung von Lenkrädern hat sich als Nachteil erwiesen, dass das doppelseitige Klebeband zum Auftreten des so genannten Losnarbigkeitseffekts und somit zur Faltenbildung der Oberfläche des Leders führt. Dieser Effekt tritt dann auf, wenn Leder mit anderen Materialien vor der Weiterverarbeitung verklebt beziehungsweise kaschiert wird. Autohersteller haben Prüfvorschriften, um den Grad der Faltenbildung des Leders objektiv zu beurteilen. Durch das Aufbringen des doppelseitigen Klebebandes werden deutliche Falten in das Leder eingeprägt, weshalb es durch das doppelseitige Klebeband zu größerem Ausschuss bei der Belederung von Lenkrädern kommt. Weiters kommt es durch das Aufkleben des doppelseitigen Klebebandes auf das Leder zur Verschlechterung der Ledereigenschaften wie Dehnbarkeit und Weichheit, was ebenfalls nachteilig ist.

Schließlich hat sich bei dem Verfahren zum Beledern von Lenkrädern unter Verwendung eines doppelseitigen Klebebandes gezeigt, dass das doppelseitige Klebeband bei Temperaturen über 50 °C seine Klebeeigenschaften verliert. In der Automobilindustrie definieren die Spezifikationen für Lenkräder allerdings einen wesentlich größeren Anwendungsbereich von beispielsweise - 40 °C bis + 120 °C, weshalb es bei der Verwendung solcher Lenkräder in besonders heißen oder kalten Temperaturzonen zu Reklamationen gekommen ist. Das doppelseitige Klebeband ermöglicht somit bestenfalls das Vorpositionieren des Lederkleides bei der Herstellung des Lederlenkrades, ist aber gänzlich ungeeignet um das Lederkleid während der gesamten Verwendungsdauer des Lederlenkrads gegen Verrutschen zu sichern.

Als weiterer Nachteil bei diesem bekannten Verfahren hat sich ergeben, dass die Dicke des Lederkleides durch Aufbringen des doppelseitigen Klebebandes deutlich zunimmt, was bei manchen Konstruktionen von Lederlenkrädern zu besonderen Schwierigkeiten bei der Verarbeitung geführt hat. Die US 5 743 408 A offenbart die Merkmale des Oberbegriffs des Anspruchs 1.

Der Erfindung liegt somit die Aufgabe zugrunde, ein Verfahren zur Herstellung von Leder für die Belederung von Bauteilen und einen solchen Bauteil zu schaffen, bei dem die vorstehend angeführten Nachteile vermieden werden.

Die Erfindung löst die Aufgabe dadurch, dass nur eine Klebeschicht unmittelbar auf der Lederrückseite des Leders beziehungsweise nur eine Klebeschicht (K) unmittelbar auf einer dem Leder abgewandten Materialverbund-Seite im Fall eines Leder-Materialverbundes zur Verklebung mit dem Bauteil aufgetragen wird, wobei ein Haft-Klebstoff zum Aufbau der Klebeschicht verwendet wird, mit der das Leder beziehungsweise das Leder-Materialverbund so oft als nötig repositioniert werden kann. Als Haft-Klebstoff versteht der Fachmann einen Klebstoff, der nach dem Auftragen hochviskos und dauerklebrig bleibt. Durch die erfindungsgemäßen Maßnahmen ist der Vorteil erhalten, dass das Lederkleid vor dem Verklemmen in einer Nut und/oder vor dem Vernähen auf dem Lenkrad mehrfach oder praktisch beliebig oft positioniert (aufgeklebt und wieder abgenommen) werden kann und somit die Position des Lederkleids auf dem Lenkrad optimiert werden kann. Hierdurch kann Leder eingespart werden, da nur geringere für die Belederung nötige Überstände des Lederkleids nötig sind, und somit die Qualität der Belederung insgesamt gehoben werden kann.

Weiters ist der Vorteil erhalten, dass die Belederung von Lederlenkrädern erstmals repariert werden kann, wenn beispielsweise eine Reklamation auf Grund eines Lederdefekts erfolgt. Die Naht kann geöffnet werden und das Lederkleid kann auch noch nach Monaten oder Jahren ohne erheblichen Kraftaufwand vom Lenkrad zerstörungsfrei abgenommen werden. Dies hat den Vorteil, dass auch keine Rückstände des abgenommen Lederkleides auf dem Lenkrad zurückbleiben und das Lenkrad unmittelbar mit einem anderen Lederkleid mit beispielsweise anders gefärbtem Leder bezogen werden kann. Da es sehr viele unterschiedliche Typen von Lenkrädern gibt kann es vorkommen, dass von einer Type nicht alle verkauf werden können. Vorteilhafterweise kann das Lederkleid in so einem Fall vor der Verschrottung des Lenkrades von dem Lenkrad abgenommen werden und das Lederkleid gegebenenfalls einer anderen Nutzung zugeführt werden.

Weiters ist der Vorteil erhalten, dass es durch das Aufbringen des Haft-Klebers auf dem Leder-Kleid oder bereits auf der Lederhaut zu keiner Faltenbildung der Lederoberfläche kommt, weshalb wesentlich geringerer Ausschuss bei der Belederung von Lederlenkrädern erzielt wird. Das Verfahren ist auch besonders kostengünstig, da im Vergleich mit dem Aufbringen eines doppelseitigen Klebebandes bei dem erfindungsgemäßen Verfahren nur eine Klebeschicht aufgebracht werden muss. Auch kann der Verfahrensschritt des Zuschneidens des doppelseitigen Klebebandes eingespart werden.

Besonders vorteilhaft ist auch, dass das Lederkleid bei der Belederung praktisch nicht belastet wird. Es muss nicht erhitzt werden, um einen Klebstoff zu aktivieren, und es wird auch nicht durch Lösungsmitteldämpfe eines aushärtenden Klebstoffes belastet. Hierdurch wird eine besonders schöne und hautfreundliche Oberfläche des Leders erhalten.

Bei bestimmten Herstellungsverfahren wird nicht nur das reine Leder vorerst zugeschnitten und zu einem Lederkleid vernäht sondern diese Verarbeitungsschritte werden unmittelbar mit einem Materialverbund durchgeführt. Ein solcher Materialverbund weist an seiner obersten Schicht das Leder auf, wobei darunter beispielsweise eine Schaumstoffschicht vorgesehen sein kann. Durch Vorsehen der Klebeschicht aus Haft-Klebstoff auf der untersten Schicht des Materialverbundes werden ebenfalls die oben angegebenen Vorteile erhalten.

Bei dem Verfahren hat sich weiters als vorteilhaft erwiesen, Lederteile des Lederkleids vor dem Auftragen der Klebeschicht zuzuschneiden, wobei dies besonders vorteilhaft durch einen Stanzvorgang durchführbar ist.

Ebenfalls hat sich als vorteilhaft erwiesen, das Aufbringen der Klebeschicht nach dem Stanzen und vor dem Vernähen der Lederteile zu dem Lederkleid durchzuführen.

Da der Haft-Klebstoff keine Kleberückstände hinterlässt, ist der gesamte Vorgang des Belederns wesentlich vereinfacht. Gemäß derzeit verwendeter Herstellungsverfahren werden beispielsweise Zweikomponenten-Kleber zum Verkleben verwendet, die oft zu Kleberückständen auf der Lederoberfläche führen, was dann regelmäßig zu Reklamationen beim Autohersteller oder Endkunden führt. Durch den Einsatz eines Haft-Klebstoffes kann die Anzahl an Reklamationen wesentlich verringert werden.

Als vorteilhaft hat sich auch erwiesen, nach dem Aufbringen der Klebeschicht eine Abdeckschicht, wie beispielsweise eine Kunststofffolie oder eine Papierschicht, auf die Klebeschicht aufzubringen. Hierdurch kann die Klebeschicht vor dem Positionieren vor Verunreinigungen wie beispielsweise Staub und Schmutz geschützt werden. Je nach Herstellungsvorgang kann es vorteilhaft sein, die Klebeschicht bereits auf die Lederhaut aufzubringen oder erst nach dem Stanzvorgang und nach dem Vernähen der Lederteile die Abdeckschicht unmittelbar vor dem Positionieren auf dem Lenkrad vom Lederkleid abzuziehen.

Als vorteilhaft hat sich weiters erwiesen Haft-Klebstoffe zu verwenden, die frei oder zumindest arm an organischen Lösemitteln sind. Hierdurch wird einerseits die Umwelt geschont und andererseits wird die Oberfläche des Lederlenkrads nicht mit Lösungsmitteln versetzt, die bei empfindlichen Personen zu Hautreizungen führen könnten.

Weitere Vorteile der Erfindung werden anhand eines Ausführungsbeispiels nachfolgend beschrieben, auf welches Ausführungsbeispiel die Erfindung aber nicht begrenzt ist.
- Figur 1: zeigt ein Lederlenkrad in einer Draufsicht.
- Figur 2: zeigt das Lederlenkrad gemäß Figur 1 in einer Schnittdarstellung.
- Figur 3: zeigt den Querschnitt des Griffteils des Lederlenkrades in einer Schnittdarstellung.

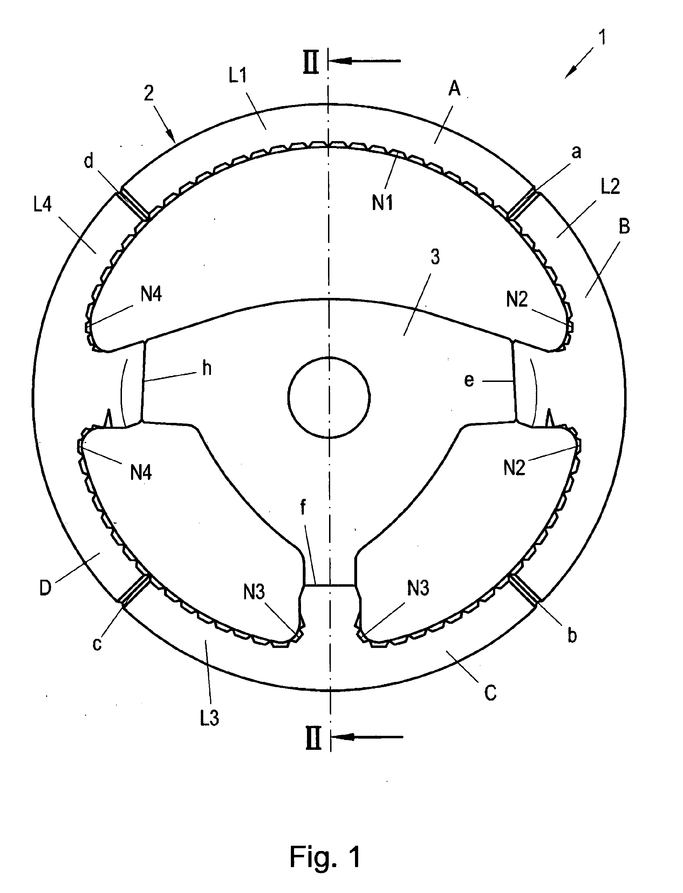

Figur 1 zeigt eine Lederlenkrad 1 eines Autos. Das Lederlenkrad 1 weist einen Griffteil 2 und einen Speicherteil 3 auf. Der Griffteil 2 ist in vier Abschnitte A, B, C und D unterteilt, die je durch eine um den Griffteil laufende Nut a, b, c, und d gegeneinander abgesetzt sind. Um ein Lenkrad bei der Herstellung des Lenkrades mit Leder zu umspannen beziehungsweise das Lenkrad zu beledern wird je Abschnitt des Lenkrades je ein so genanntes Lederkleid hergestellt. Das Lederkleid besteht aus einem oder mehreren zusammengenähten Lederstücken, die derart zugeschnitten beziehungsweise zugestanzt und vernäht wurden, dass das Lederkleid genau auf den jeweiligen Abschnitt des Lenkrades passt. Das Lederkleid des jeweiligen Abschnittes wird flächig mit dem Lenkrad verklebt und durch die Nuten und eine Naht auf dem Lenkrad fixiert.

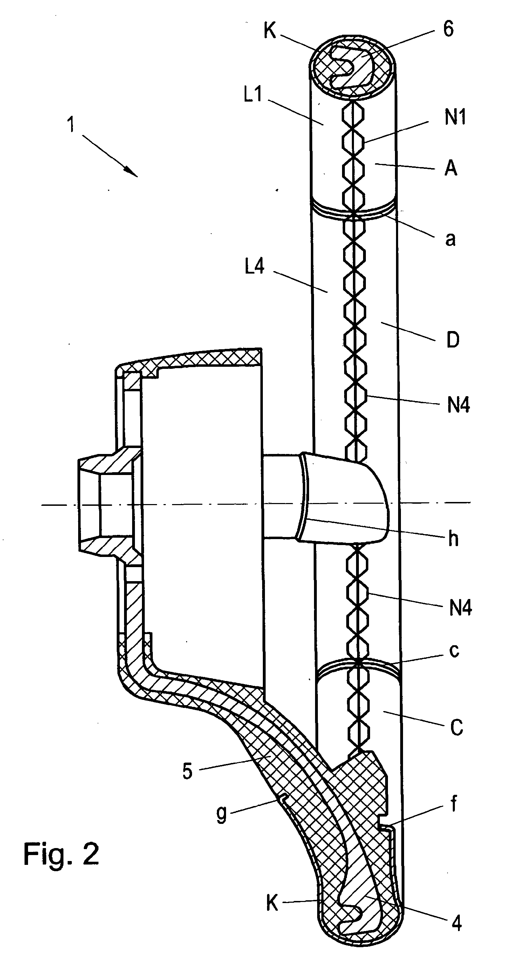

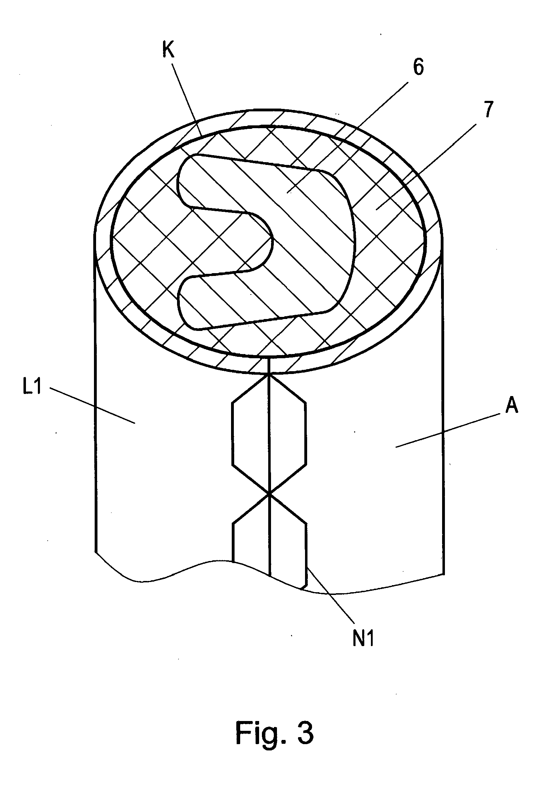

Bei dem in den Figuren 1 bis 3 dargestellten Lederlenkrad 1 bedeckt ein erstes Lederkleid L 1 den ersten Abschnitt A des Handteils 2 des Lederlenkrads 1 und wird durch die Nuten a und d sowie eine Naht N1 fixiert. Ein zweites Lederkleid L2 bedeckt den zweiten Abschnitt B des Handteils 2 und wird durch die Nuten a und b am Handteil 2, sowie eine Nut e und eine in den Figuren nicht sichtbare Nut am Speichenteil 3 und eine Naht N2 fixiert. Ein drittes Lederkleid L3 bedeckt den dritten Abschnitt C des Handteils 2 und wird durch die Nuten b und c am Handteil 2, sowie Nuten f und g am Speichenteil 3 und eine Naht N3 fixiert. Ein viertes Lederkleid L4 bedeckt den vierten Abschnitt D des Handteils 2 und wird durch die Nuten c und d am Handteil 2, sowie eine Nut h und eine in den Figuren nicht sichtbare Nut am Speichenteil 3 und eine Naht N4 fixiert.

Der Speichenteil 3 des Lederlenkrads 1 weist einen metallischen Kern 4 auf, der mit Kunststoff 5 umspritzt ist. Der Handteil 2 des Lederlenkrads 1 weist ebenfalls einen metallischen Kern 6 auf, der mit einem flexiblen und relativ weichem Kunststoff 7 umspritzt ist, damit das darüber fixierte Lederkleid sich bei stärkerem Druck durch den Benutzer geringfügig reversibel verformen lässt.

Bei dem erfindungsgemäßen Verfahren zur Herstellung des Lederlenkrads 1 wird nunmehr einerseits das zu beledernde Bauteil, in diesem Fall das noch kein Lederkleid aufweisende Lenkrad, und das für die Belederung vorgesehene Leder L bereitgestellt. Anhand der Konstruktionszeichnungen des Lenkrades werden die Schnittmuster für die einzelnen Lederkleider L1 bis L4 des Lederlenkrades 1 festgelegt. Je nach Form des herzustellenden Lederkleides kann es vorkommen, dass ein Lederkleid aus zwei oder mehreren Lederteilen zusammengenäht werden muss, was bei dem in den Figuren 1 bis 3 dargestellten Lederkleid L1 bis L4 nicht der Fall ist.

Das eigentliche Beledern des Lenkrades 1 mit den Lederkleidern L1 bis L4 ist eine von einer Person durchgeführte manuelle Tätigkeit, die viel Erfahrung und Geschick erfordert. Das Beledern eines Lenkrades benötigt im Schnitt etwa eine Stunde manuelle Tätigkeit. Die Person beginnt beispielsweise mit der Belederung des Abschnitts A des Lederlenkrads 1, indem sie das Lederkleid L1 auf den Abschnitt A des Handteils 2 hält und prüft, ob das Lederkleid L1 die geeigneten Abmaße aufweist, dass die Kanten in die Nuten a und d eingebracht werden können und eine gleichmäßige Naht N 1 durchgeführt werden kann. Wenn die Person feststellt, dass das erste Lederkleid L1 die passende Größe hat, dann muss das erste Lederkleid L1 vorpositioniert werden, damit es beim Vernähen und beim einbringen in die Nuten a und d nicht verrutscht.

Das erste Lederkleid L1 weist nunmehr auf der Unterseite des Leders eine Klebeschicht K von Haft-Kleber auf, der sich durch seine hochviskose und dauerklebrige Eigenschaft auszeichnet. Die Klebeschicht K wurde bereits bei der Herstellung des Leders beziehungsweise Stanzteiles als einer der letzten Verarbeitungsschritte aufgebracht und durch eine Kunststofffolie vor Verschmutzung geschützt. Mit einer Stanzmaschine wurden aus der die Klebeschicht und Kunststofffolie tragenden Lederhaut die Teile der Lederkleider L1 bis L4 herausgestanzt. Ebenso wäre es möglich gewesen, die Kleberschicht auf das fertige Stanzteil auf zu bringen und durch eine Kunststofffolie zu schützen.

Die Person kann nunmehr beim Beledern des Lederlenkrads 1 die Kunststofffolie von der Klebeschicht K abziehen und das Lederkleid L1 auf den Abschnitt A des Lederlenkrades 1 vorpositionieren. Üblicherweise gelingt es nicht beim ersten Aufsetzen des Lederkleids L1 auf den Abschnitt A die geeignete Position des Lederkleids L1 zu finden. So kann beispielsweise das Lederkleid L1 bei der Nut a zu lang und dafür bei der Nut d zu kurz sein oder nicht ausreichend Leder vorhanden sein um, eine optisch einwandfreie Naht N1 auszuführen. Durch die Eigenschaften des Haftklebers ist es der Person ermöglicht das erste Lederkleid L1 so oft als nötig, also beispielsweise 10 oder auch 20 Mal, nochmals vom Abschnitt A des Lederlenkrads 1 abzuziehen und erneut zu positionieren.

Da der Haftkleber keine Kleberückstände auf dem Abschnitt A des Lederlenkrads 1 hinterlässt ist keine Gefahr gegeben, dass die Oberseite des Lederkleids L1 mit Kleberrückständen verschmutzt werden könnte. Durch die dauerviskose Eigenschaft des Haftklebers ist die Person beim Beledern nicht durch Verarbeitungszeiten oder Trocknungszeiten des Klebers behindert und abgelenkt und kann sich die nötige Zeit nehmen, bis das erste Lederkleid L1 geeignet vorpositioniert ist. Anschließend kann die Person das Lederkleid L1 in die Nuten a und d eindrücken und mit dem Nähen der Naht N 1 beginnen. Während dem Nähen wird das Lederkleid L1 durch die Klebeschicht K sicher gegen Verrutschen gehalten. Hierdurch ist der Vorteil erhalten, dass das erste Lederkleid L1 besonders einfach und ohne Zeitdruck und Gefahr der Verschmutzung der Lederoberseite für das Vernähen vorpositioniert werden kann und auch während dem Vernähen seine Position behält.

Auf die beschriebene Weise werden anschließend die restlichen Lederkleider L2 bis L4 auf die Abschnitte B bis D des Lederlenkrads 1 vorpositioniert und in den Nuten a bis h fixiert und dann vernäht.

Vorteilhaft ist hierbei auch, dass die Klebeschicht K sehr dünn ist und somit die Dicke des Handteils 2 des Lederlenkrads 1 nicht unerwünscht erhöht wird.

Wenn das Lederkleid eines Lederlenkrads aus mehreren Teilen Leder besteht, dann kann es vorteilhaft sein vorerst die Lederteile auszustanzen, zu vernähen und erst auf das vernähte Lederkleid die Klebstoffschicht aufzubringen. Bei diesem Verfahrensablauf kann der Bedarf an Klebstoff besonders gering gehalten werden, da nur tatsächlich zur Belederung des Lenkrades vorgesehene Teile mit Klebstoff bestrichen werden.

Wenn bei der Herstellung des Leders bereits auf die gesamte Lederhaut eine Klebeschicht aufgebracht wurde, dann ist es vorteilhaft vorerst die Teile des Lederkleids miteinander zu Vernähen und erst von dem fertigen Lederkleid die Abdeckschicht der Klebstoffschicht abzuziehen, um Verschmutzungen der Klebstoffschicht beim Vernähen zu verhindern.

Es kann erwähnt werden, dass es vorteilhaft ist nur solche Teile der Lederhaut mit der Klebeschicht zu versehen, die entsprechend des Stanzplanes auch tatsächlich zum Beledern des Lederlenkrades vorgesehen sind. Hierdurch kann Klebstoff eingespart werden und die Stanzrückstände der Lederhaut können gegebenenfalls noch einer anderen Nutzung zugeführt werden.

Es kann erwähnt werden, dass es zur Belederung von Lenkrädern vorteilhaft ist einen Haft-Klebstoff zu verwenden, der in einem Temperaturbereich von -60 °C bis +150 °C, insbesondere in einem Temperaturbereich von -40 °C bis +120 °C, seine spezifizierten Klebeeigenschaften behält. Diese Temperaturbereiche sind in der Automobilindustrie vorgeschriebene Temperaturbereiche und die Auswahl eines solchen Haft-Klebstoffes gewährleistet, dass das Lederkleid immer gegen Verrutschen gesichert ist.

Es kann erwähnt werden, dass dem Fachmann Haft-Klebstoffe an sich als Adhesin Klebstoffe beispielsweise von der Firma 3M als VHB Klebefilme oder von der Firma Henkel bekannt sind.

Es kann erwähnt werden, dass auf manche Bauteile nicht nur das Leder sonder eine Leder-Materialverbundschicht aufgebracht wird. So eine Materialverbundschicht kann beispielsweise durch eine Schicht Leder und eine auf der Lederunterseite aufgebrachte Schicht aus Schaumstoff oder einem ähnlichen reversibel verformbaren Material gebildet sein. In so einem Fall wird der Haft-Klebstoff auf die unterste Materialschicht (Schaumstoff in diesem Beispiel) aufgebracht.

Es kann erwähnt werden, dass das erfindungsgemäße Verfahren zur Herstellung von Leder für die Belederung von Bauteilen auch verwendet werden kann, um gänzlich andere Bauteile als Lenkräder zu beledern. So könnten beispielsweise auch andere Fahrzeugrauminnenteile, wie beispielsweise der Schaltknüppel oder das Armaturenbrett, beledert werden oder aber auch Kisten oder Sessel beledert werden.

## Patentansprüche

1. Verfahren zur Herstellung von Leder (L) für die Belederung von Bauteilen (1), wobei folgende Verfahrenschritte durchgeführt werden:
• Bereitstellen von gefertigtem Leder (L), **dadurch gekennzeichnet, dass**
• nur eine Klebeschicht (K) unmittelbar auf der Lederrückseite des Leders (L) beziehungsweise nur eine Klebeschicht (K) unmittelbar auf einer dem Leder abgewandten Materialverbund-Seite im Fall eines Leder-Materialverbundes zur Verklebung mit dem Bauteil (1) aufgetragen wird, wobei ein Haft-Klebstoff zum Aufbau der Klebeschicht (K) verwendet wird, mit der das Leder (L) beziehungsweise der Leder-Materialverbund so oft als nötig repositioniert werden kann.

2. Verfahren gemäß Anspruch 1, **dadurch gekennzeichnet, dass** das Leder (L) vor dem Auftragen der Klebeschicht (K) bei einem Stanzvorgang für die Belederung in Lederteile passend zugeschnitten wird.

3. Verfahren gemäß Anspruch 2, **dadurch gekennzeichnet, dass** Lederteile vor beziehungsweise nach dem Auftragen der Klebeschicht (K) bei einem Nähvorgang zu einem Lederkleid (L1, L2, L3, L4) für die Belederung zusammengenäht werden.

4. Verfahren gemäß einem der vorherigen Ansprüche, **dadurch gekennzeichnet, dass** nach dem Auftragen der Klebeschicht (K) eine Abdeckschicht auf den Haft-Klebstoff aufgebracht wird.

5. Verfahren gemäß Anspruch 4 wenn abhängig vom Anspruch 3, **dadurch gekennzeichnet, dass** die Abdeckschicht erst nach dem Nähvorgang zum Beledern des Bauteiles (1) abgezogen wird.

6. Verfahren gemäß einem der Ansprüche 1, 4 oder 5, **dadurch gekennzeichnet, dass** die Klebeschicht (K) nur auf jene Flächenabschnitte auf dem Leder (L) aufgebracht wird, die gemäß dem Stanzplanes zum Ausstanzen und zum Beledern eines Lederlenkrads (1) vorgesehen sind.

7. Bauteil (1) mit einer durch Belederung mit Leder (L) erzeugten Lederoberfläche, **dadurch gekennzeichnet, dass** unmittelbar auf der Lederrückseite beziehungsweise unmittelbar auf der dem Leder abgewandten Materialverbund-Seite im Fall eines Leder-Materialverbundes nur eine Klebeschicht (K) zur Verklebung mit dem Bauteil vorgesehen ist, welche Klebeschicht (K) aus Haft-Klebstoff gebildet ist und mit der das Leder (L) beziehungsweise der Leder-Materialverbund so oft als nötig repositionierbar ist.

8. Bauteil (1) gemäß Anspruch 7, **dadurch gekennzeichnet, dass** der Haft-Klebstoff arm beziehungsweise frei von organischen Lösungsmitteln ist.

9. Bauteil (1) gemäß einem der Ansprüche 7 bis 8, **dadurch gekennzeichnet, dass** der Bauteil durch ein Lederlenkrad (1) gebildet ist.

10. Bauteil (1) gemäß einem der Ansprüche 7 bis 9, **dadurch gekennzeichnet, dass** der Haft-Klebstoff in einem Temperaturbereich von -60 °C bis +150 °C, insbesondere in einem Temperaturbereich von -40 °C bis +120 °C, seine spezifizierten Klebeeigenschaften behält.

## Claims

1. A method for the production of leather (L) for covering component parts (1) with leather, wherein the following process steps are performed:
• providing finished leather (L), **characterized in that**
• only one adhesive layer (K) is applied directly onto the leather reverse side of the leather (L) or, respectively, only one adhesive layer (K) is applied directly onto a material compound side facing away from the leather, in case of a leather-material compound, for sticking to the component part (1), wherein an adhesive glue is used for constructing the adhesive layer (K), by means of which the leather (L) or, respectively, the leather-material compound can be repositioned as often as necessary.

2. A method according to claim 1, **characterized in that**, for the covering with leather, the leather (L) is cut appropriately into leather parts in a punching process prior to the application of the adhesive layer (K).

3. A method according to claim 2, **characterized in that**, for the covering with leather, leather parts are sewn together in a sewing process to form a leather dress (L1, L2, L3, L4) prior to or, respectively, after the application of the adhesive layer (K).

4. A method according to any of the preceding claims, **characterized in that** a covering layer is applied to the adhesive glue after the application of the adhesive layer (K).

5. A method according to claim 4 if dependent on claim 3, **characterized in that** the covering layer is pulled off only after the sewing process for covering the component part (1) with leather.

6. A method according to any of claims 1, 4 or 5, **characterized in that** the adhesive layer (K) is applied only to those surface sections on the leather (L) which are envisaged for being punched out according to the punching scheme and for covering a leather steering wheel (1) with leather.

7. A component part (1) comprising a leather surface produced by being covered with leather (L), **characterized in that**, directly on the leather reverse side or, respectively, directly on the material compound side facing away from the leather, in case of a leather-material compound, only one adhesive layer (K) for sticking to the component part is provided, which adhesive layer (K) is formed from adhesive glue and by means of which the leather (L) or, respectively, the leather-material compound is repositionable as often as necessary.

8. A component part (1) according to claim 7, **characterized in that** the adhesive glue is low in or, respectively, free from organic solvents.

9. A component part (1) according to any of claims 7 to 8, **characterized in that** the component part is constituted by a leather steering wheel (1).

10. A component part (1) according to any of claims 7 to 9, **characterized in that** the adhesive glue maintains its specified adhesive properties in a temperature range from -60°C to +150°C, in particular in a temperature range from -40°C to +120°C.

## Revendications

1. Procédé de fabrication de cuir (L), destiné au revêtement en cuir d'éléments de montage (1), dans lequel les étapes de procédé suivantes sont effectuée
* mise au point d'un cuir (L) élaboré, caractérisée en ce
* qu'uniquement une couche de colle (K) est étalée immédiatement sur la face envers de cuir du cuir (L), respectivement, uniquement une couche de colle (K) est étalée immédiatement sur une face opposée au cuir d'un composite de matières, dans le cas d'un composite de matières et de cuir, pour le collage avec un élément de montage (1), un adhésif autocollant étant employé pour le montage de la couche de colle (K), grâce auquel le cuir (L), respectivement, le composite de matières et de cuir, peut être repositionné autant de fois que nécessaire.

2. Procédé selon la revendication 1, **caractérisé en ce que** le cuir (L) est découpé en pièces de cuir, de manière à s'ajuster, par une opération d'estampage, avant le revêtement par la couche de colle (K), pour le revêtement en cuir.

3. Procédé selon la revendication 2, **caractérisé en ce que** les pièces de cuir sont assemblées par une couture avant, respectivement, après, le revêtement par la couche de colle (K), lors d'une opération de couture pour obtenir une enveloppe de cuir (L1, L2, L3, L4), pour le revêtement en cuir.

4. Procédé selon l'une des revendications précédentes, **caractérisé en ce qu'**une couche de couverture est rapportée sur l'adhésif autocollant après le revêtement par la couche de colle (K).

5. Procédé selon la revendication 4, lorsqu'elle est dépendante de la revendication 3, **caractérisé en ce que** la couche de couverture n'est enlevée qu'après l'opération de couture pour le revêtement en cuir de l'élément de montage (1).

6. Procédé selon l'une des revendications 1, 4 ou 5, **caractérisé en ce que** la couche de colle (K) n'est rapportée que sur certaines portions de surface sur le cuir (L) qui sont prévues selon la planification de l'estampage pour être estampées et pour le revêtement par du cuir d'un volant de direction en cuir (1).

7. Elément de montage (1) comprenant une surface de cuir réalisée par un revêtement en cuir à l'aide de cuir (L), **caractérisé en ce qu'**immédiatement sur la face envers du cuir, respectivement, immédiatement sur la face opposée au cuir du composite de matière et de cuir, dans le cas d'un composite à base de matière et de cuir, uniquement une couche de colle (K) est prévue pour le collage avec l'élément de montage, laquelle couche de colle (K) est formée d'un adhésif autocollant et à l'aide de laquelle le cuir (L), respectivement, le composite à base de matière et de cuir, peut être repositionné autant de fois que nécessaire.

8. Elément de montage (1) selon la revendication 7, **caractérisé en ce que** l'adhésif autocollant est pauvre, respectivement, exempt, de solvants organiques.

9. Elément de montage (1) selon l'une des revendications 7 à 8, **caractérisé en ce que** l'élément de montage est constitué d'un volant de direction en cuir (1).

10. Elément de montage (1) selon l'une des revendications 7 à 9, **caractérisée en ce que** l'adhésif autocollant conserve ses propriétés de collage spécifiques dans un domaine de températures de - 60 °C à + 150 °C, en particulier, dans un domaine de températures de - 40 °C à + 120 °C.
